# FASCICULE DE BREVET EUROPEEN

(11) **EP 1 160 128 B1**
(45) Date de publication et mention de la délivrance du brevet: **27.01.2010**
(21) Numéro de dépôt: 01401184.5
(22) Date de dépôt: 09.05.2001
(51) Int. Cl.: B60Q 1/26, F16B 2/00

(54) **Dispositif d'éclairage ou de signalisation pour véhicule comportant deux pièces fixées par clipsage**
Beleuchtungsvorrichtung oder Anzeigevorrichtung für Kraftfahrzeug mit zwei Teilen durch Schnappverschluss verbunden
Lighting or signalling device for vehicle including two parts fitted by snap-on

(30) Priorité: 31.05.2000 FR 0007064
(43) Date de publication de la demande: 05.12.2001
(73) Titulaire: VALEO VISION, 93012 Bobigny Cedex (FR)
(72) Inventeur: Gasquet, Jean Claude, 93012 Bobigny Cédex (FR)

(56) Documents cités:
- FR-A- 2 728 057
- FR-A- 2 765 666
- US-A- 5 113 320

## Description

L'invention concerne les dispositifs d'éclairage et/ou de signalisation pour véhicule.

On sait que pour fixer l'une à l'autre deux pièces d'un tel dispositif, telle qu'une pièce support et une pièce à fonction optique, on fait en général appel à des moyens de liaison par vis, par soudure à ultrasons ou par clipsage classique. Les moyens doivent être discrets pour être le moins possible visible depuis l'extérieur du dispositif. De plus, il est préférable de concevoir ces moyens sans avoir à munir les moules d'injection des pièces de parties supplémentaires coûteuses telles que des cames ou tiroirs. Mais surtout, ces moyens de fixation doivent permettre un assemblage facile tout en garantissant la pérennité de la fixation au sein de l'environnement difficile des dispositifs optiques d'un véhicule en mouvement. Cet environnement se caractérise notamment par d'importantes sollicitations mécaniques et par des variations de température de grande amplitude.

Les moyens de clivage connus permettent un assemblage facile, mais montrent souvent une résistance mécanique insuffisante compte tenu des variations de température.

On connaît par exemple du document FR-A-2 728 057, un projecteur pour véhicule, dans lequel la glace de fermeture est clipsée sur le boîtier. La glace (ou le boîtier) comporte des ergots venant se loger dans des ouvertures du boîtier (ou de la glace).

Le document FR 2 710 395 montre également la fixation d'une glace sur un boîtier par clipsage.

Un but de l'invention est de fournir un mode de fixation des pièces offrant une meilleure résistance mécanique face à d'importantes variations de température, tout en demeurant facile à assembler.

En vue de réalisation de ce but, on prévoit selon l'invention un dispositif d'éclairage et/ou de signalisation pour véhicule, comportant une première pièce comprenant un ergot de clipsage et une deuxième pièce comprenant au moins une paroi définissant un logement de réception de l'ergot pour le clipsage des deux pièces l'une à l'autre, la paroi comprenant une portion élastiquement déformable, le dispositif étant agencé de sorte que l'ergot ne peut pénétrer dans le logement qu'après avoir déformé la portion de la paroi, l'ergot étant élastiquement déformable et ne pouvant pénétrer dans le logement qu'après avoir été déformé, le dispositif étant agencé de sorte que le logement n'est pas déformé lorsque l'ergot est reçu dans l'orifice, le dispositif étant agencé de sorte que l'ergot prend appui contre un chant de la deuxième pièce et contre un chant d'un flasque définissant le logement à l'encontre de son retrait du logement.

Ainsi, l'ergot ne peut être extrait du logement que moyennant une sollicitation déformant la portion de paroi, et la pièce supportant l'ergot encaisse efficacement les sollicitations de l'ergot pour empêcher son retrait.

Par conséquent, une simple déformation de l'ergot lui-même ne suffit pas à cette extraction. De même, une déformation de la pièce portant l'ergot, par exemple sous l'effet de la dilatation, n'entraîne pas la séparation des pièces. On réalise donc une fixation dont l'assemblage est tout aussi facile à réaliser que le clipsage classique mais beaucoup plus fiable à l'encontre d'une séparation intempestive.

La fixation peut être réalisée de façon visuellement discrète et sans organe coûteux dans le moule.

Avantageusement l'ergot prend appui contre la portion de paroi à l'encontre de son retrait suivant une direction perpendiculaire à une direction de déformation de la portion de paroi.

Ainsi, une sollicitation de l'ergot tendant à son retrait ne déforme pas la portion de paroi, ce qui accroît la résistance de la fixation.

L'invention pourra en outre présenter au moins l'une des caractéristiques suivantes :
- l'une des pièces est un organe assurant une fonction optique,
- l'une des pièces est une bonnette.
- la portion de paroi s'étend dans le prolongement d'une partie de la pièce traversée par un faisceau lumineux du dispositif,
- l'une des pièces est un support,
- l'une des pièces s'étend dans un évidement de l'autre pièce l'ergot s'étend sur la pièce portant l'évidement à un bord de l'évidement,
- l'une des pièces comporte au moins un doigt et l'autre pièce présente au moins un orifice de réception du doigt,
- l'une des pièces présente au moins une rampe apte à servir de guide à l'autre pièce durant l'approche relative des deux pièces pour leur positionnement relatif avant leur fixation mutuelle,
- l'une des pièces présente au moins une butée apte à servir d'appui à l'autre pièce lorsque pour leur positionnement relatif les deux pièces sont fixées l'une à l'autre,
- l'une des pièces comporte au moins une lamelle élastiquement déformable apte à servir en appui sur l'autre pièce que rattraper un jeu de montage,
- la lamelle est apte à rattraper le jeu suivant une direction d'accostage relatif des deux pièces,
- il s'agit d'un feu.

D'autres caractéristiques et avantages de l'invention apparaîtront, encore dans la description, suivante d'un mode préféré de l'utilisation donnée à titre d'exemple non limitatif aux dessins annexés :

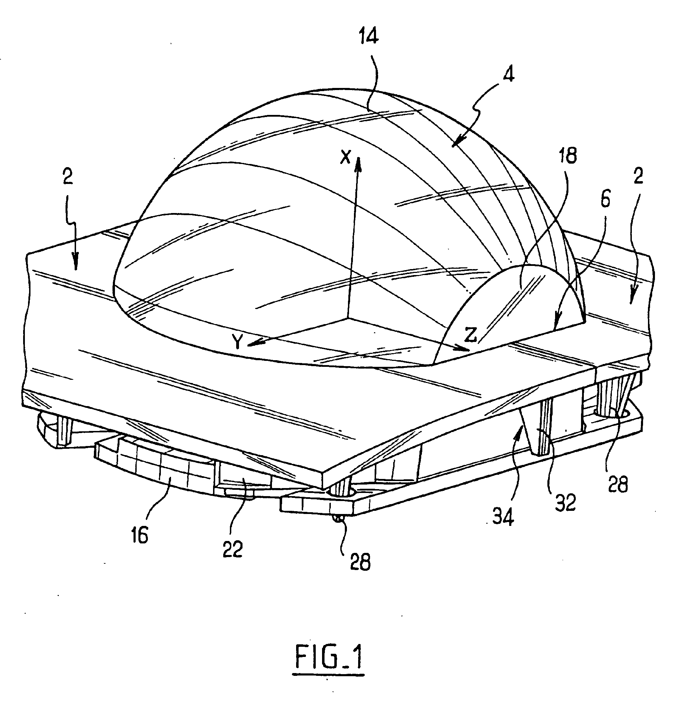

- la figure 1 est une vue partielle en perpective de dessus d'une platine et d'une bonnette d'un feu selon l'invention à l'état monté,

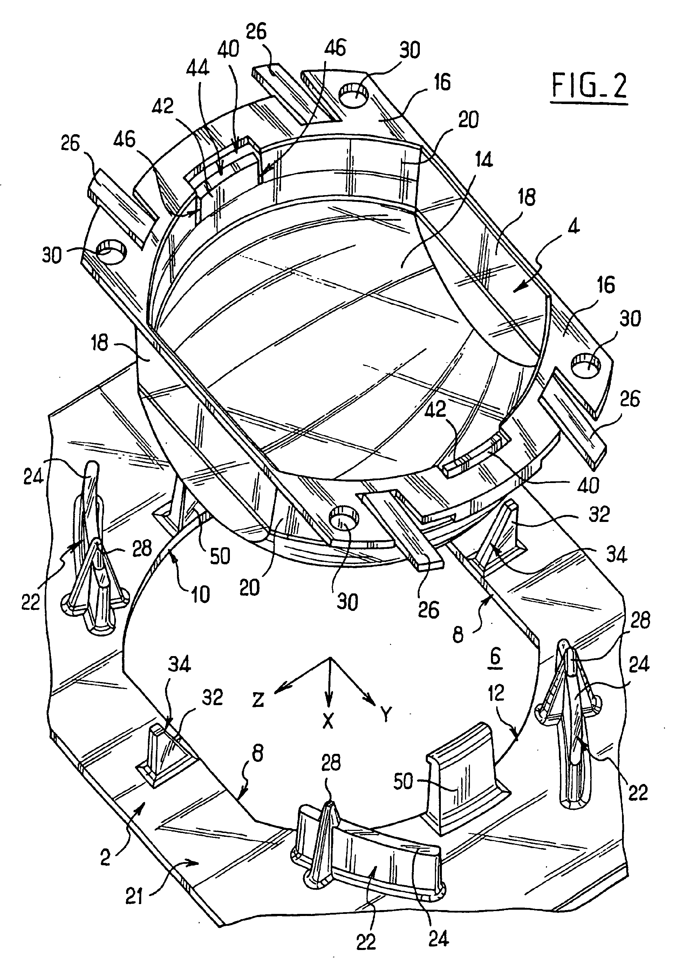

- la figure 2 est une vue partielle en perspective de dessous de la platine et de la bonnette de la figure 1 à l'état démonté, et
- les figures 3 à 7 montrent respectivement cinq étapes de l'assemblage de la platine et la bonnette de la figure 1.

Dans le mode de réalisation illustré aux figures, le feu pour véhicule selon l'invention comporte de façon classique et non illustrée un boîtier par l'intermédiaire duquel il est fixé au véhicule une source lumineuse sous la forme d'une lampe, un réflecteur réfléchissant vers l'extérieur du feu, un faisceau émis par la lampe et une glace de fermeture. Il comporte en outre un support 2 et une bonnette 4 illustrés sur les figures.

La platine 2 a une forme générale plane rectangulaire s'étendant dans un plan perpendiculaire à un axe X formant l'axe optique du feu. Cette platine présente en son centre un large évidement délimité par deux bords horizontaux supérieur et inférieur 8 et par deux bords latéraux en arc de cercle gauche et droit 10, 12, les arcs de cercle ayant leur centre de courbure situé du côté de l'évidement 6. La platine est supportée dans le feu par des moyens classiques non représentés. Elle est destinée à supporter elle-même la bonnette 4. La bonnette 4 a pour fonction de colorer dans une couleur prédéterminée par exemple la couleur ambre le faisceau émis par le feu. La bonnette présente une partie avant 14 en forme générale d'hémisphère et une partie arrière 16 de forme générale plane positionnée pour intercepter la sphère à peu près au niveau de son équateur. La partie avant 14 est limitée en partie supérieure et inférieure par deux méplats respectifs 18 horizontaux parallèles à l'axe X du feu. Ces méplats sont reliés l'un à l'autre par deux portées cylindriques latérales 20 ayant pour axe l'axe X du feu et prolongeant vers l'arrière le bord arrière de la sphère 14. La partie arrière 16 est constituée par deux flasques chacun en forme d'arc de cercle ayant leur centre de courbure du côté du centre de la sphère et s'étendant vers l'extérieur à partir des portées 20 respectives. La bonnette 4 est destinée à être fixée à la platine 2 de sorte que la partie avant 14 est reçue dans l'ouverture 6, les deux flasques 16 s'étendant parallèlement au plan général de la platine à l'arrière de celle-ci. Les bords 10 et 12 de l'évidement 6 épousent étroitement la courbure des portées cylindriques 20. Les bords supérieur et inférieur 8 de l'évidement 6 sont alors en contact avec les méplats 18 de la partie avant 14. Cette coopération entre la forme de la bonnette et les contours de l'orifice 6 contribue à un bon centrage relatif des deux pièces dans un plan perpendiculaire à l'axe X du feu avec un aspect esthétiquement acceptable depuis l'extérieur du feu.

La platine 2 comporte des nervures 22 ici au nombre de quatre réparties autour de l'évidement 6 et s'étendant en saillie depuis une face arrière de la platine vers l'arrière du feu parallèlement à l'axe X. Chaque nervure 22 est profilé suivant l'axe X et a dans un plan transversal à cet axe une section en forme d'arc de cercle, un centre de courbure dirigé vers l'évidement 6. Chaque nervure a un bord arrière 24 essentiellement parallèle au plan de la platine 2. La bonnette 4 est en appui par les flasques 16 sur les bords arrière 24 des quatre nervures 22.

Dans chaque flasque 16 de la bonnette sont découpées deux lames 26 s'étendant vers l'extérieur. Chaque lame 26 s'étend par ailleurs en saillie du flasque 16 correspondant vers l'avant, de sorte que les flasques 16 viennent en appui sur les nervures 22 aux moyens des lames 26. Les lames 26 en appui sur les nervures tendent à solliciter la bonnette vers l'arrière du feu suivant l'axe X de sorte que les quatre lames assurent un rattrapage du jeu suivant cet axe.

A chaque nervure est par ailleurs associé un picot 28 de forme allongée suivant l'axe X vers l'arrière du feu s'étendant en saillie du sommet 24 de la nervure. Chaque flasque 16 présente deux orifices 30 près de ces extrémités respectives supérieur et inférieur. Les quatre orifices 30 sont positionnés pour venir en coïncidence avec les quatre picots 28. Lorsque la bonnette est fixée à la platine, les picots 28 pénètrent dans les orifices 30 de façon à assurer le positionnement définitif relatif des deux pièces dans un plan transversal à l'axe X.

La platine 2 comporte deux reliefs de positionnement 32 s'étendant en saillie de la face arrière de la platine vers l'arrière du feu. Les deux reliefs 32 sont contigus aux bords respectifs supérieur et inférieur 8 de l'évidement 6. Chaque relief présente une rampe 34 du côté de l'évidement dont la partie avant est contiguë à l'évidement et allant en s'éloignant de l'évidement vers l'arrière du feu. Chaque rampe 34 est rectiligne. Les deux rampes 34 servent d'appui à la partie avant 14 de la bonnette notamment à sa face sphérique et à ses méplats 18 lors de l'accostage de la bonnette durant son approche sur la platine suivant l'axe X.

Chaque flasque 16 de la bonnette présente une ouverture 40 ménagée en partie médiane du flasque de façon à être contiguë à la portée cylindrique 20 associée. L'ouverture 40 de chaque flasque a une forme générale en arc de cercle à centre de courbure dirigé vers l'intérieur de la bonnette. Une lame élastiquement flexible est ménagée dans une portion de la portée cylindrique correspondante 20. Cette lame s'étend au droit de l'ouverture 40. Le chant arrière de cette lame est contigu à l'ouverture 40 et s'étend légèrement en avant de la face arrière du flasque 16. La lame 42 présente des bords supérieur et inférieur 46 horizontaux parallèles à la direction X. De la sorte la lame 42 est élastiquement flexible suivant une direction horizontale Y perpendiculaire à la direction X c'est-à-dire de gauche à droite.

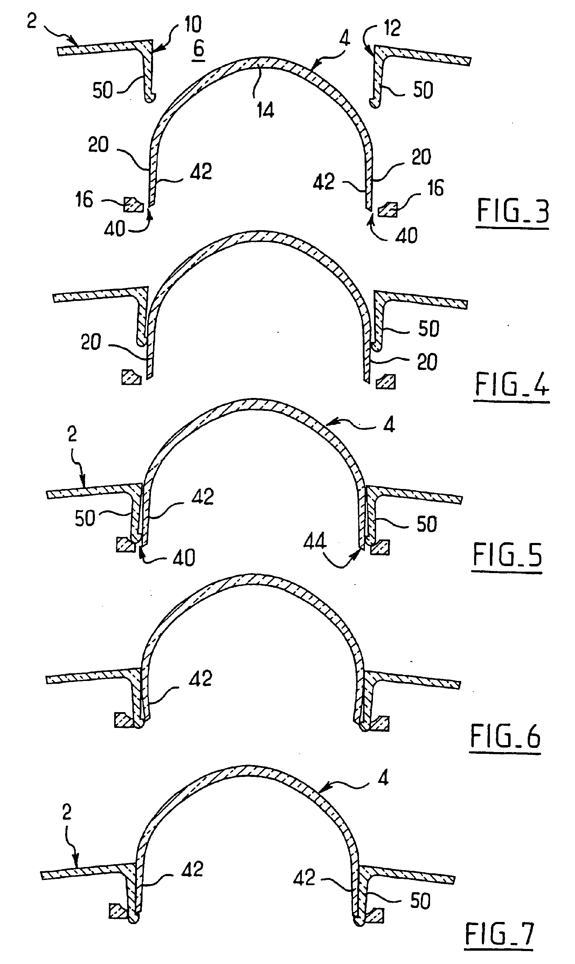

La platine 2 qui comporte deux ergots 50 s'étendant en saillie de la face arrière de la platine parallèlement à l'axe X vers l'arrière du feu. Chaque ergot a en section perpendiculaire à l'axe X une forme générale en arc de cercle. Il se termine en partie arrière par un crochet profilé généralement suivant la direction verticale Z perpendiculaire à l'axe X. Cet ergot est flexible élastiquement suivant la direction horizontale Y de gauche à droite. Il est conformé pour pouvoir pénétrer dans l'ouverture 40 correspondante. Le crochet de l'ergot est orienté vers le centre de l'évidement 6. Une fois l'ergot reçu dans l'ouverture 40 le crochet vient en appui suivant la direction X sur le chant 44 de la lame 42. De plus, l'ouverture est dimensionnée de façon à épouser étroitement la forme de l'ergot de sorte que, une fois l'ergot reçu dans l'ouverture le jeu de montage entre l'ergot et très réduit. On a illustré aux figures 3 à 7 les différentes étapes de la pénétration de l'ergot dans l'ouverture correspondante. La figure 3 montre l'étape initiale durant laquelle la bonnette est présentée en regard de l'évidement de la platine les ergots s'étendant au droit des ouvertures correspondantes.

A la figure 4, lorsque la bonnette commence à pénétrer dans l'évidement 6, les ergots viennent en appui contre les faces externes des portées cylindriques 20 sachant que la dimension de la bonnette au niveau de ces faces externes suivant la direction Y est légèrement supérieure à la distance entre les extrémités des crochets des ergots suivant cette même direction, les ergots se fléchissent légèrement vers l'extérieur suivant la direction Y lorsque les ergots sont en appui sur ces portées.

La figure 5 montre la position des ergots à la fin de leur course sur les portées 20 suivant l'axe X. L'extrémité des ergots est alors en butée contre le flasque 16 au bord de l'ouverture 40 correspondante. De plus, les ergots sont toujours fléchis légèrement vers l'extérieur.

L'extrémité arrière des ergots est arrondie et conformée de sorte que cette extrémité coopère par effet de rampe contre un chanfrein ménagé sur le bord externe de l'ouverture de sorte qu'une nouvelle sollicitation vers l'arrière sur les ergots guident ceux-ci vers l'intérieur de l'ouverture comme illustré à la figure 6. Les ergots commencent alors à pénétrer dans les ouvertures. Ce faisant les ergots ne sont plus fléchis et reprennent leur position normale du fait de leur appui contre le bord externe de l'ouverture 40 au niveau du chant du flasque 16. En revanche cette pénétration des ergots provoque la sollicitation vers l'intérieur de la lame 42 correspondante et sa déformation subséquente par fléchissement. Lorsque les ergots arrivent en fin de course, les lames 42 peuvent reprendre leur position normale par élasticité. Les ergots sont alors en appui suivant la direction Y vers l'extérieur contre le chant de l'ouverture 40 et vers l'intérieur contre la lame 44. A l'encontre de leur retrait hors de l'ouverture suivant la direction X, les crochets des ergots sont en appui contre le chant 44 des lames 42.

On voit donc que le clipsage des deux pièces l'une à l'autre implique la déformation de chaque ergot et la déformation de chaque lame 42. Les mêmes déformations sont nécessaires si l'on veut séparer les deux pièces l'une de l'autre. En outre du fait que la sollicitation de la bonnette pour son extraction entraîne une sollicitation de l'ergot sur la lame 44 sur le chant de celle-ci perpendiculairement à la direction Y de flexion de cette lame, on voit qu'aucune sollicitation de ce type ne peut provoquer la séparation intempestive des deux pièces.

Comme on le voit la fixation des deux pièces est quasiment indémontable et irréversible. Les quatre lames 26 permettent de rattraper le jeu nécessaire au montage des ergots par clipsage.

La bonnette est de préférence réalisée dans un matériau ayant de bonne propriété élastique et acceptant des déformations élastiques par exemple du polycarbonate ou un matériau d'une famille équivalente. La platine est également réalisée dans un matériau thermoplastique pour pouvoir absorber la déformation temporaire subie lors de l'opération d'assemblage. Le principe de déformation auto bloquante sur l'invention utilise pleinement les propriétés élastiques des deux matériaux correspondant aux deux pièces à assembler.

Dans ce mode de réalisation de l'invention, les deux pièces sont obtenues directement par injection sans avoir à prévoir dans les moules des organes supplémentaires tels que des cames ou des tiroirs. On obtient ainsi une fixation robuste et d'une grande précision. On pourra adapter la rigidité du système de clipsage en variant la longueur des ergots 50 suivant l'axe X ainsi que la longueur des bords découpés 46 des lames 42. Toutefois ces fentes doivent être conçues en tenant compte des fuites de lumière lorsque la bonnette assurent la couleur de la fonction.

On voit que l'invention propose une méthode de fixation d'un élément dans un système optique spécifique avec un concept qui garantit une liaison irréversible entre deux éléments en matière plastique sans pièce supplémentaire sans investissement spécifique au niveau du moule à injection et sans dégrader l'aspect visible de l'extérieur du feu ou projecteur à glace lisse.

Ce concept est applicable à tout système exigeant une grande précision dans la position relative des deux éléments optiques et plus particulièrement dans les feux de signalisation ou les projecteurs.

L'invention est particulièrement appropriée lorsque l'objet à fixer telle que la bonnette est intégrée dans un système optique dont l'élément extérieur est à surface lisse de sorte que l'intérieur du produit est entièrement visible et pose des contraintes esthétiques importantes. L'invention propose à cet égard un système de liaison aussi discret que possible. Le système proposé permet d'avoir les éléments participant à la fixation située sur la face cachée de la face porteuse et de la pièce à fixer.

Bien entendu, on pourra apporter à l'invention de nombreuses modifications sans sortir du cadre de celle-ci. L'invention pourra être appliquée à un projecteur et par exemple à un projecteur faisant par ailleurs office de feu. On pourra varier le nombre et la disposition des différents éléments assurant le centrage et/ou le positionnement des deux pièces tels que les nervures, les reliefs, les picots, les ergots, les lames et les lames de rattrapage de jeu.

L'invention est applicable à la fixation d'autres pièces qu'une bonnette et une platine.

On remarquera que des dispositifs n'entrant pas dans le cadre de l'invention peuvent être mise en oeuvre sans que l'ergot 50 soit élastiquement déformable pourvu que la lame 42 associée le soit.

## Revendications

1. Dispositif d'éclairage et/ou de signalisation pour véhicule, comportant une première pièce (2) comprenant un ergot de clipsage (50) et une deuxième pièce (4) comprenant au moins une paroi (20) définissant un logement (40) de réception de l'ergot pour le clipsage des deux pièces l'une à l'autre, la paroi comprenant une portion (42) élastiquement déformable, le dispositif étant agencé de sorte que l'ergot (50) ne peut pénétrer dans le logement (40) qu'après avoir déformé la portion (42) de la paroi, l'ergot (50) étant élastiquement déformable et ne pouvant pénétrer dans le logement (40) qu'après avoir été déformé, le dispositif étant agencé de sorte que le logement (40) n'est pas déformé lorsque l'ergot est reçu dans l'orifice, **caractérisé en ce que** le dispositif est agencé de sorte que l'ergot (50) prend appui contre un chant (44) de la deuxième pièce (4) et contre un chant d'un flasque (16) définissant le logement (40) à l'encontre de son retrait du logement (40).

2. Dispositif selon la revendication 1, **caractérisé en ce que** l'ergot (50) prend appui contre la portion (42) de paroi à l'encontre de son retrait suivant une direction (X) perpendiculaire à une direction (Y) de déformation de la portion (42) de paroi.

3. Dispositif selon l'une des revendications 1 et 2, **caractérisé en ce que** l'une des pièces est un organe assurant une fonction optique.

4. Dispositif selon l'une des revendications 1 à 3, **caractérisé en ce que** l'une (4) des pièces est une bonnette.

5. Dispositif selon l'une des revendications 1 à 4, **caractérisé en ce que** la portion (42) de paroi s'étend dans le prolongement d'une partie de la pièce traversée par un faisceau lumineux du dispositif.

6. Dispositif selon l'une des revendications 1 à 5, **caractérisé en ce que** l'une (2) des pièces est un support.

7. Dispositif selon l'une des revendications 1 à 6, **caractérisé en ce que** l'une (4) des pièces s'étend dans un évidement (6) de l'autre pièce (2) l'ergot s'étend sur la pièce (2) portant l'évidement (6) à un bord de l'évidement.

8. Dispositif selon l'une des revendications 1 à 7, **caractérisé en ce que** l'une (2) des pièces comporte au moins un doigt (28) et l'autre pièce (4) présente au moins un orifice (30) de réception du doigt.

9. Dispositif selon l'une des revendications 1 à 8, **caractérisé en ce que** l'une (2) des pièces présente au moins une rampe (34) apte à servir de guide à l'autre pièce (4) durant l'approche relative des deux pièces pour leur positionnement relatif avant leur fixation mutuelle.

10. Dispositif selon l'une des revendications 1 à 9, **caractérisé en ce que** l'une (2) des pièces présente au moins une butée (22) apte à servir d'appui à l'autre pièce (4) lorsque pour leur positionnement relatif les deux pièces sont fixées l'une à l'autre.

11. Dispositif selon l'une des revendications 1 à 10, **caractérisé en ce que** l'une (4) des pièces comporte au moins une lamelle (26) élastiquement déformable apte à servir en appui sur l'autre pièce (2) que rattraper un jeu de montage.

12. Dispositif selon la revendication 11, **caractérisé en ce que** la lamelle (26) est apte à rattraper le jeu suivant une direction d'accostage relatif des deux pièces.

13. Dispositif selon l'une des revendications 1 à 12, **caractérisé en ce que** l'ergot (50) et le logement (40) s'étendent sur des faces internes des pièces.

14. Dispositif selon l'une des revendications 1 à 13, **caractérisé en ce qu'**il s'agit d'un feu.

## Claims

1. Lighting and/or signalling device for a vehicle, comprising a first part (2) which comprises a clipping lug (50), and a second part (4) comprising at least one wall (20) which defines a receptacle (40) for receipt of the lug for clipping the two parts to one another, the wall comprising a resiliently deformable portion (42), the device being arranged such that the lug (50) can penetrate into the receptacle (40) only after having deformed the portion (42) of the wall, the lug (50) being resiliently deformable and being able to penetrate into the receptacle (40) only after having been deformed, the device being arranged such that the receptacle (40) is not deformed when the lug is received in the aperture, **characterised in that** the device is arranged such that the lug (50) is supported against a side (44) of the second part (4) and against a side of a flange (16) which defines the receptacle (40), against withdrawal of the lug from the receptacle (40).

2. Device according to claim 1, **characterised in that** the lug (50) is supported against the portion (42) of wall, against its withdrawal, according to a direction (X) which is perpendicular to a direction (Y) of deformation of the portion (42) of wall.

3. Device according to one of claims 1 and 2, **characterised in that** one of the two parts is a unit which provides an optical function.

4. Device according to one of claims 1 to 3, **characterised in that** one (4) of the parts is a cup.

5. Device according to one of claims 1 to 4, **characterised in that** the portion (42) of wall extends in the extension of part of the part through which a light beam of the device passes.

6. Device according to one of claims 1 to 5, **characterised in that** one (2) of the parts is a support.

7. Device according to one of claims 1 to 6, **characterised in that** one (4) of the parts extends in a recess (6) in the other part (2) and the lug extends on the part (2) which bears the recess (6), at an edge of the recess.

8. Device according to one of claims 1 to 7, **characterised in that** one (2) of the parts comprises at least one finger (28) and the other part (4) has at least one aperture (30) for receipt of the finger.

9. Device according to one of claims 1 to 8, **characterised in that** one (2) of the parts has at least one ramp (34) which can act as a guide for the other part (4) during the relative approach of the two parts, for their positioning in relation to one another before they are secured to one another.

10. Device according to one of claims 1 to 9, **characterised in that** one (2) of the parts has at least one stop (22) which can act as a support for the other part (4) when the two parts are secured to one another for their relative positioning.

11. Device according to one of claims 1 to 10, **characterised in that** one (4) of the parts comprises at least one resiliently deformable leaf (26) which can act as a support on the other part (2) in order to eliminate fitting play.

12. Device according to claim 11, **characterised in that** the leaf (26) can eliminate the play according to a direction of approach of the two parts to one another.

13. Device according to one of claims 1 to 12, **characterised in that** the lug (50) and the receptacle (40) extend on inner surfaces of the parts.

14. Device according to one of claims 1 to 13, **characterised in that** it relates to a light.

## Patentansprüche

1. Beleuchtungs- und/oder Signalgebungsvorrichtung für Fahrzeuge, mit einem eine Rastnase (50) aufweisenden ersten Bauteil (2) und einem zweiten Bauteil (4), das wenigstens eine Wand (20) aufweist, die einen die Nase aufnehmenden Sitz (40) zum ineinander Verrasten der beiden Bauteile bildet, wobei die Wand einen elastisch verformbaren Abschnitt (42) aufweist, wobei die Vorrichtung so ausgebildet ist, dass die Nase (50) nur nach Verformung des Wandabschnitts (42) in den Sitz (40) eindringen kann, wobei die Nase (50) elastisch verformbar ist und nur nach ihrer Verformung in den Sitz (40) eindringen kann, wobei die Vorrichtung so ausgebildet ist, dass der Sitz (40) nicht verformt ist, wenn die Nase in der Öffnung aufgenommen ist,
**dadurch gekennzeichnet, dass** die Vorrichtung so ausgebildet ist, dass die Nase (50) an einer Schmalseite (44) des zweiten Bauteils (4) und an einer Schmalseite einer den Sitz (40) bildenden Wange (16), ihrer Entfernung aus dem Sitz (40) entgegenwirkend, in Anlage kommt.

2. Vorrichtung nach Anspruch 1,
**dadurch gekennzeichnet, dass** die Nase (50) an dem Wandabschnitt (42) ihrer Entfernung längs einer Richtung (X) entgegenwirkend senkrecht zu einer Richtung (Y), in der der Wandabschnitt (42) verformt wird, in Anlage kommt.

3. Vorrichtung nach einem der Ansprüche 1 oder 2,
**dadurch gekennzeichnet, dass** eines der Bauteile ein Element ist, das eine optische Funktion erfüllt.

4. Vorrichtung nach einem der Ansprüche 1 bis 3,
**dadurch gekennzeichnet, dass** eines (4) der Bauteile ein Vorsatzfilter ist.

5. Vorrichtung nach einem der Ansprüche 1 bis 4,
**dadurch gekennzeichnet, dass** der Wandabschnitt (42) in der Verlängerung eines Teils des Bauteils verläuft, das von einem Lichtbündel der Vorrichtung durchquert wird.

6. Vorrichtung nach einem der Ansprüche 1 bis 5,
**dadurch gekennzeichnet, dass** eines (2) der Bauteile eine Halterung ist.

7. Vorrichtung nach einem der Ansprüche 1 bis 6,
**dadurch gekennzeichnet, dass** sich eines (4) der Bauteile in eine Aussparung (6) des anderen Bauteils (2) erstreckt und die Nase sich an einem Rand der Aussparung auf dem mit der Aussparung (6) versehenen Bauteil (2) erstreckt.

8. Vorrichtung nach einem der Ansprüche 1 bis 7,
**dadurch gekennzeichnet, dass** eines (2) der Bauteile wenigstens einen Finger (28) und das andere Bauteil (4) wenigstens eine Öffnung (30) zur Aufnahme des Fingers aufweist.

9. Vorrichtung nach einem der Ansprüche 1 bis 8,
**dadurch gekennzeichnet, dass** eines (2) der Bauteile wenigstens eine Schräge (34) aufweist, die dem anderen Bauteil (4) während der relativen Annäherung der beiden Bauteile als Führung zu dienen vermag, um diese vor ihrer gegenseitigen Befestigung relativ zueinander zu positionieren.

10. Vorrichtung nach einem der Ansprüche 1 bis 9,
**dadurch gekennzeichnet, dass** eines (2) der Bauteile wenigstens einen Anschlag (22) aufweist, der dem anderen Bauteil (4) bei der Befestigung der beiden Bauteile aneinander zu deren relativer Positionierung als Anlage zu dienen vermag.

11. Vorrichtung nach einem der Ansprüche 1 bis 10,
**dadurch gekennzeichnet, dass** eines (4) der Bauteile wenigstens eine elastisch verformbare Zunge (26) aufweist, die dazu dient, zum Ausgleich eines Montagespiels am anderen Bauteil (2) in Anlage zu kommen.

12. Vorrichtung nach Anspruch 11,
**dadurch gekennzeichnet, dass** die Zunge (26) das Spiel in einer Richtung auszugleichen vermag, in der die beiden Bauteile relativ zueinander aneinandergefügt werden.

13. Vorrichtung nach einem der Ansprüche 1 bis 12,
**dadurch gekennzeichnet, dass** sich die Nase (50) und der Sitz (40) an den Innenseiten der Bauteile erstrecken.

14. Vorrichtung nach einem der Ansprüche 1 bis 13,
**dadurch gekennzeichnet, dass** es sich um eine Leuchte handelt.
